# EUROPEAN PATENT SPECIFICATION

(11) **EP 1 849 641 B1**
(45) Date of publication and mention of the grant of the patent: **14.07.2010**
(21) Application number: 07106181.6
(22) Date of filing: 13.04.2007
(51) Int. Cl.: B60K 11/04, F28F 9/00

(54) **Heat exchanger mounting bracket**
Halterung zur Montage eines Wärmetauschers
Support de montage d'échangeur de chaleur

(30) Priority: 26.04.2006 GB 0608159; 14.03.2007 US 717887
(43) Date of publication of application: 31.10.2007
(73) Proprietor: Delphi Technologies, Inc., Troy, MI 48007 (US)
(72) Inventor: Jamil, Ben Hamida, 3897 Foetz (LU); Slawomir, Kedziora, 4988 Sanem (LU); Coyle, Brian J, Orchard Park, NY 14129 (US); Gmerek Robert Charles, Burt, NY 14028 (US); Leitch, Frank Joseph, North Tonawanda, NY 14120 (US)
(74) Representative: Robert, Vincent

(56) References cited:
- EP-A- 1 067 005
- EP-A- 1 247 681
- EP-A2- 1 106 413
- DE-A1- 10 008 638
- DE-A1- 10 051 567
- DE-A1- 10 150 643

## Description

The present invention relates to a heat exchanger mounting bracket, particularly, a heat exchanger mounting bracket for mounting a heat exchanger in the engine compartment of a vehicle as defined in the preamble of claim 1. Such a mounting bracket is known for instance from EP-A2-1 247 681.

Vehicles are typically provided with a heat exchanger toward the front of the engine compartment, often in the form of a Condenser Radiator Fan Module (CRFM). Such CRFM's are crucial to the operation of the vehicle. Due to the CRFM's inherent fragility and location it is often damaged in the event of a medium impact crash (where damage is caused but the automobile is not destroyed) to the extent that it will no longer work and will not allow the vehicle to be driven away to a garage for example. This presents a major inconvenience to the driver.

Furthermore, government safety regulations often require that certain portions of a vehicle deform by a sufficient amount in the event of an impact with particular objects in order to minimise damage to that object (for example a pedestrian).

According to the present invention, there is provided a heat exchanger mounting bracket comprising:-
a body member having a longitudinal slot toward one end for locating a portion of a heat exchanger and a pivotal arrangement toward the other end, wherein the pivotal arrangement and longitudinal slot allow displacement of the portion of the heat exchanger from a fore to an aft position upon application of an impact force.

Preferably, the portion of the heat exchanger comprises a mounting pin. Preferably, the heat exchanger mounting bracket is provided with an end stop means which prevents the bracket from allowing displacement of the heat exchanger past the aft position. More preferably, the end stop means comprises a sprung arm co-operable with a pocket of the bracket. Typically, the co-operation between the sprung arm and pocket retains the bracket in the aft position when reached.

Preferably, the pivot arrangement comprises a bolt provided on a bracket of the vehicle which passes through an aperture provided on the heat exchanger bracket.

Typically, a resilient collar, such as a rubber collar, is provided in the longitudinal slot of the bracket.

Preferably, the pivotal arrangement further comprises shear means which holds the bracket in the fore position prior to shearing and allows movement of the bracket from the fore to the aft position after shearing due to the impact force. Typically, the shear means is adapted to shear only when a pre-determined impact force has been applied to the bracket. Preferably, the shear means comprises a shear pin having a shear strength determined by its material thickness and strength properties. Typically the shear pin comprises metallic material.

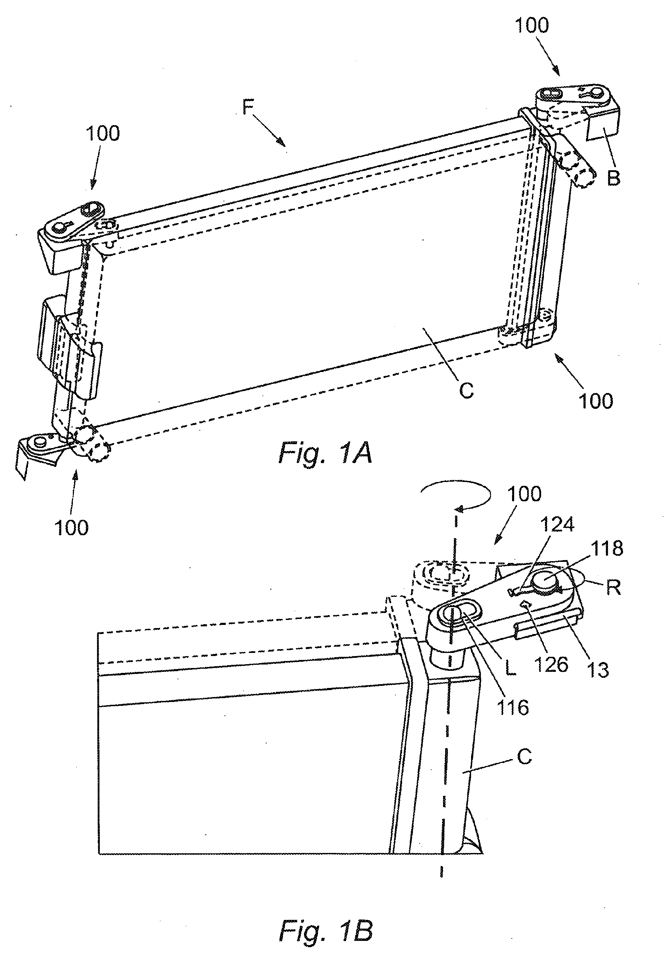

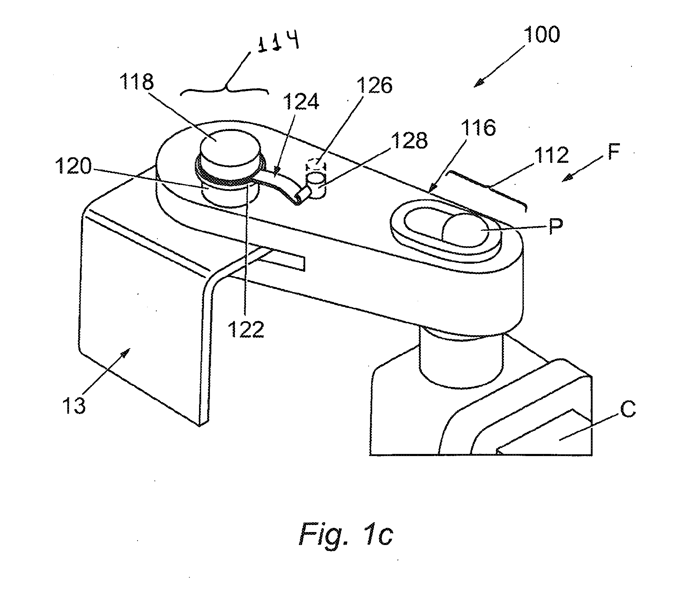

Embodiments of the apparatus according to the present invention will now be described, with reference to the accompanying drawings, in which:-
Fig. 2A is a perspective view of the rear of a CRFM mounted in the engine of a vehicle by mounting brackets according to the present invention;
Fig. 2B is a more detailed view of one side of the CRFM of Fig. 2A where the CRFM has been moved rearward by an impact force; and
Fig. 2C is a detailed view of the bracket of Figs. 2A and 2B.

Referring to Figs. 2A to 2C, in the present invention, a heat exchanger mounting bracket 100 comprises a slot 112 lined with a resilient collar 116 at one end and a pivot arrangement 114 at the other. The resilient collar is typically formed from rubber.

The pivot arrangement 114 comprises a bolt 118 which passes through an aperture (not shown) in the bracket 100 in order to allow connection of the heat exchanger mounting bracket 100 to a bracket B of the vehicle. This allows the bracket 100 to pivot around the bolt 118 in the event of an impact force (described subsequently). A metal insert 120 and washer 122 having a spring arm 124 extending therefrom are also provided around the bolt. The spring arm 124 interacts with a pocket 126 formed in the bracket 100 to form end-stop means as discussed subsequently. Shear means such as a shear pin 128 is also provided. The shear pin is formed of a suitable metal having a diameter which is calculated during manufacture of the bracket to shear when a given impact force is applied to the bracket.

In normal use, prior to any impact, a mounting pin P of each corner of the heat exchanger C will reside in corresponding slots 112 of each heat exchanger mounting bracket 100. In the event of a frontal impact at one side of the vehicle, a portion of the vehicle body will deform in the first instance, which will reduce any clearance between the CRFM C and the front of the vehicle in a first phase. If the impact force is relatively small, no movement of the CRFM C will occur. However, if the impact force is larger, it will continue to exert a rearward force (represented by force arrow F) on the CRFM C (spacer members (not shown) may be used). With reference to Fig. 2B, such rearward force causes mounting pin P (on both the upper and lower portions of that side of the CRFM C) to urge the bracket 100 rearward. At the outset of this, the resilient collar 116 will begin to be compressed. This will cause a shearing force to be exerted on the shear pin 128. Only once the shearing force exerted on the shear pin 128 has reached a critical level (calculated during manufacture of the bracket 100 and pin 128) will it shear. This allows a relatively gentle force to be applied to the bracket without moving it from the fore to the aft position. On continuation of the impact force past this point, the pin shear pin 128 will shear and the bracket 100 will pivot around bolt 118 in the direction referenced R. As the bracket is pivoting rearward, the pin P of the CRFM must slide along the slot 112, as indicated by arrow L in Fig. 2B) in order to maintain a constant distance between each mounting pin P on either side of the bracket thereby preventing the heat exchanger C from being twisted. When the CRFM reaches a rearmost position the sprung arm 124 of the washer 122 clicks into the pocket 126 of the bracket to prevent any further rotation of the bracket 100. This action allows that side of the CRFM C to move from a fore to an aft position without damage being caused thereto.

In such an impact, the other side of the CRFM C is maintained in its forward position by its corresponding bracket 100 since no rearward force is actually applied to the mounting pin P of the CRFM C at that side. Rather, a rotational moment is provided by the force F on the other side of the CRFM C which causes this side of the CRFM to simply pivot without moving the heat exchanger mounting bracket 100 from its fore to rear position.

The above describes the operation of the brackets 100 in a front impact on one side of the vehicle; however, it will be understood that the system is also suitable for a full front impact which simultaneously exerts an impact force on both sides (left and right) of the heat exchanger C. In such a full front impact all shear pins will shear (if the impact is severe enough) and all pins P will move from the forward position to the rearward position and will be held in this position by the interaction between the sprung arm 124 and the pocket 126 of each bracket 100. This allows the whole CRFM C to move rearward without twisting or being otherwise damaged.

The above described arrangements avoid the CRFM being twisted and / or crushed during a medium magnitude impact whilst ensuring that it remains adequately supported after the impact. With such an arrangement, a vehicle involved in a medium magnitude impact may be driven immediately after the impact without requiring any servicing. This allows it to be driven to the nearest garage for example.

Another advantage of the described heat exchanger mounting brackets is that they may be re-used after an impact since none of the parts are damaged by the displacement process other than the shear pins which are readily replaceable.

Furthermore, these arrangements also allow a portion of the impact force to be absorbed by controlled deformation / displacement of heat exchanger components in order to minimise any damage to the object with which the collision occurs, for example a pedestrian.

Modifications and improvements may be made to the foregoing without departing from the scope of the invention.

## Claims

1. A heat exchanger mounting bracket comprising:- a body member having a longitudinal slot (112) toward one end for locating a portion (P) of a heat exchanger, and **characterised by** a pivotal arrangement (114) toward the other end, wherein the pivotal arrangement and longitudinal slot allow displacement of the portion (P) of the heat exchanger from a fore to an aft position upon application of an impact force.

2. A heat exchanger mounting bracket according claim 1, wherein the portion of the heat exchanger comprises a mounting pin (P).

3. A heat exchanger mounting bracket according either of claims 1 or 2, wherein the heat exchanger mounting bracket is provided with an end stop means (124; 126) which prevents the bracket from allowing displacement of the heat exchanger past the aft position.

4. A heat exchanger mounting bracket according any of claims 1 to 3, wherein the end stop means comprises a sprung arm (124) co-operable with a pocket (126) of the bracket.

5. A heat exchanger mounting bracket according claim 4, wherein the co-operation between the sprung arm (124) and pocket (126) retains the bracket in the aft position when reached.

6. A heat exchanger mounting bracket according any of claims 1 to 5, wherein the pivot arrangement (114) comprises a bolt (118) provided on a bracket (B) of the vehicle which passes through an aperture provided on the heat exchanger bracket.

7. A heat exchanger mounting bracket according to any of claims 1 to 6, wherein a resilient collar 116, such as a rubber collar, is provided in the longitudinal slot (112) of the bracket.

8. A heat exchanger mounting bracket according to any of claims 1 to 7, wherein the pivotal arrangement (114) further comprises shear means (12) which holds the bracket in the fore position prior to shearing and allows movement of the bracket from the fore to the aft position after shearing due to the impact force.

9. A heat exchanger mounting bracket according to claim 8, wherein the shear means (12) is adapted to shear only when a pre-determined impact force has been applied to the bracket.

10. A heat exchanger mounting bracket according to either of claims 8 or 9, wherein the shear means comprises a shear pin (12) having a shear strength determined by its material thickness and strength properties.

## Patentansprüche

1. Halterung zur Anbringung eines Wärmetauschers, die aufweist:
ein Hauptelement mit einer Längsaussparung (112) an einem Ende zum Positionieren eines Teils (P) eines Wärmetauschers, und **gekennzeichnet durch** eine Drehanordnung (114) an dem anderen Ende, wobei die Drehanordnung und die Längsaussparung eine Verschiebung des Teils (P) des Wärmetauschers von einer vorne- zu einer hinten-Position ermöglicht bei Anwendung einer Einwirkungskraft.

2. Halterung zur Anbringung eines Wärmetauschers gemäß Anspruch 1, wobei der Teil des Wärmetauschers einen Befestigungsstift (P) aufweist.

3. Halterung zur Anbringung eines Wärmetauschers gemäß Anspruch 1 oder 2, wobei die Halterung zur Anbringung eines Wärmetauschers versehen ist mit einem Endestopmittel (124; 126), das verhindert, dass die Halterung eine Verschiebung des Wärmetauschers über die hinten-Position hinaus ermöglicht.

4. Halterung zur Anbringung eines Wärmetauschers gemäß einem der Ansprüche 1 bis 3, wobei das Endestopmittel einen Federarm (124) aufweist, der mit einer Tasche (126) der Halterung zusammenarbeitet.

5. Halterung zur Anbringung eines Wärmetauschers gemäß Anspruch 4, wobei die Kooperation zwischen dem Federarm (124) und der Tasche (126) die Halterung in der hinten-Position hält, wenn diese erreicht ist.

6. Halterung zur Anbringung eines Wärmetauschers gemäß einem der Ansprüche 1 bis 5, wobei die Drehanordnung (114) einen Bolzen (118) aufweist, der an einer Halterung (B) des Fahrzeugs vorgesehen ist, der durch eine Öffnung hindurchgeht, die an der Halterung des Wärmetauschers vorgesehen ist.

7. Halterung zur Anbringung eines Wärmetauschers gemäß einem der Ansprüche 1 bis 6, wobei eine elastische Manschette 116, wie eine Gummimanschette, in der Längsaussparung (112) der Halterung vorgesehen ist.

8. Halterung zur Anbringung eines Wärmetauschers gemäß einem der Ansprüche 1 bis 7, wobei die Drehanordnung (114) weiter aufweist Schermittel (12), das die Halterung in der vorne-Position hält vor einem Scheren und eine Bewegung der Halterung von der vorne- zu der hinten-Position ermöglicht nach einem Scheren aufgrund der Einwirkungskraft.

9. Halterung zur Anbringung eines Wärmetauschers gemäß Anspruch 8, wobei das Schermittel (12) ausgebildet ist, nur zu scheren, wenn eine vorgegebene Einwirkungskraft auf die Halterung angewendet wurde.

10. Halterung zur Anbringung eines Wärmetauschers gemäß Anspruch 8 oder 9, wobei das Schermittel einen Scherstift (12) mit einer Scherstärke aufweist, die bestimmt ist durch ihre Eigenschaften der Materialdicke und -stärke.

## Revendications

1. Support de montage pour échangeur de chaleur, comprenant :
un élément de corps ayant une fente longitudinale (112) vers une extrémité pour placer une portion (P) d'un échangeur de chaleur, et **caractérisé par** un agencement pivotant (114) vers l'autre extrémité, tels que l'agencement pivotant et la fente longitudinale permettent un déplacement de la portion (P) de l'échangeur de chaleur depuis une position antérieure vers une position postérieure lors de l'application d'une force d'impact.

2. Support de montage pour échangeur de chaleur selon la revendication 1, dans lequel la portion de l'échangeur de chaleur comprend une tige de montage (P).

3. Support de montage pour échangeur de chaleur selon l'une ou l'autre des revendications 1 et 2, dans lequel le support de montage pour échangeur de chaleur est pourvu d'un moyen d'arrêt terminal (124 ; 126) qui empêche que le support permette un déplacement de l'échangeur de chaleur au-delà de la position postérieure.

4. Support de montage pour échangeur de chaleur selon l'une quelconque des revendications 1 à 3, dans lequel le moyen d'arrêt terminal comprend un bras fendu (124) capable de coopérer avec une poche (126) du support.

5. Support de montage pour échangeur de chaleur selon la revendication 4, dans lequel la coopération entre le bras fendu (124) et la poche (126) retient le support dans la position postérieure lorsqu'il l'a atteinte.

6. Support de montage pour échangeur de chaleur selon l'une quelconque des revendications 1 à 5, dans lequel l'agencement pivotant (114) comprend un goujon (118) prévu sur un support (B) du véhicule qui passe à travers une ouverture prévue sur le support de montage pour échangeur de chaleur.

7. Support de montage pour échangeur de chaleur selon l'une quelconque des revendications 1 à 6, dans lequel un collier élastique (116), comme un collier en caoutchouc, est prévu dans la fente longitudinale (112) du support.

8. Support de montage pour échangeur de chaleur selon l'une quelconque des revendications 1 à 7, dans lequel l'agencement pivotant (114) comprend en outre un moyen à cisaillement (12) qui tient le support dans la position antérieure avant le cisaillement et qui permet un mouvement du support de la position antérieure à la position postérieure après cisaillement en raison d'une force d'impact.

9. Support de montage pour échangeur de chaleur selon la revendication 8, dans lequel le moyen à cisaillement (12) est adapté à se cisailler uniquement quand une force d'impact prédéterminée a été appliquée au support.

10. Support de montage pour échangeur de chaleur selon l'une ou l'autre des revendications 8 et 9, dans lequel le moyen à cisaillement comprend une tige de cisaillement (12) ayant une résistance au cisaillement déterminée par l'épaisseur et les propriétés de résistance de son matériau.
